# FASCICULE DE BREVET EUROPEEN

(11) **EP 1 124 410 B1**
(45) Date de publication et mention de la délivrance du brevet: **01.12.2004**
(21) Numéro de dépôt: 99940272.0
(22) Date de dépôt: 02.09.1999
(51) Int. Cl.: A01G 9/02

(54) **DISPOSITIF POUR REMPLACER LES ARBRES, ARBUSTES, FLEURS ET LES ENTRETENIR**
VORRICHTUNG ZUM UMPFLANZEN UND PFLEGEN VON BÄUMEN, STRÄUCHERN UND BLUMEN
DEVICE FOR REPLACING TREES, SHRUBS, FLOWERS AND FOR TENDING SAME

(43) Date de publication de la demande: 22.08.2001
(73) Titulaire: Dokhelar, Marc, 64200 Arcangues (FR)
(72) Inventeur: Dokhelar, Marc, 64200 Arcangues (FR)
(86) Numéro de dépôt international: PCT/FR1999/002086
(87) Numéro de publication internationale: WO 2001/015516

(56) Documents cités:
- EP-A- 0 249 027
- EP-A- 0 250 945
- BE-A- 776 450
- DE-U- 8 714 967
- FR-A- 2 775 418
- DATABASE WPI Section PQ, Week 9734 Derwent Publications Ltd., London, GB; Class P13, AN 97-366944 XP002083420 & JP 09 154408 A (TAKEI M), 17 juin 1997 (1997-06-17)

## Description

La présente invention, concerne un dispositif pour déplacer et remplacer, entretenir, cultiver,les arbres, arbustes et fleurs, destinés à l'ornementation végétale des parcs, jardins, terrasses, balcons et habitations et la culture en pépinières.

Le remplacement des végétaux est effectué par l'arrachage et la plantation, nécessitant des coûts importants, la plante arrachée étant difficilement récupérable et la nouvelle plantation demande des soins pour sa reprise et un certain temps pour son développement. L'entretien demande un arrosage régulier et un désherbage suivi.

Les racines des végétaux se développent et s'entrelacent avec les racines des végétaux proches, au profit de certains, empêchant la maîtrise du développement, de l'arrosage, du drainage, du désherbage et du substrat. Certains végétaux se développent trop et casse l'harmonie du jardin; d'autres fleurissent pendant une période courte ;il faut les remplacer.

Les arbustes et arbres demandent des soins , désherbage autour des pieds apport d'engrais, arrosage, haubanage. Le paillage déposé au pieds des arbustes à tendance à se disperser dans les côtés,ainsi que l'eau d'arrosage et les engrais ,les pieds d'arbustes ou arbres sont souvent blessés après les opérations de tonte,le vent renverse les végétaux,les herbes envahissent les pieds des végétaux.

Le dispositif, selon l'invention, permet de remédier à ces inconvénients. Il comporte en effet, selon une première caractéristique, un contenant en forme d'un cylindre ,ouvert des deux côtés, enterré.,ou demi enterré ou posé.Dans ce contenant est introduit un conteneur conique, ayant un diamètre sensiblement inférieur au contenant et entouré d'une sangle avec deux manches en saillie pour faciliter son enlèvement,et l'étanchéité entre le contenant et le conteneur,il épouse la forme intérieure du contenant et coulisse à l'intérieur de celui-ci ,il enveloppe les racines et le substrat du végétal,il à un fond ajouré ou percé par un ou plusieurs orifices circulaires,qui se pose sur une ou plusieurs toiles polypropylène type géotextile ou toiles à fibres thermoliées, superposées , tendus par un segment flexible en inox ou en polyester coulissant et exerçant une pression sur la paroi intérieure du contenant.

La base du conteneur plaque une ou plusieurs toiles sur la terre en exerçant une pression en relation avec son poids;ainsi le besoin en eau du végétal est assuré par capillarité,les racines sont contenus dans le conteneur grâce aux toiles géotextile ou toiles à fibres thermoliées qui empêchent la pénétration des racines.On peut ainsi changer de conteneur, transplanter et remplacer le végétal à volonté, pour changer de décor, en supprimant les problèmes de reprise.

Le contenant cylindrique et le conteneur de forme cylindrique et conique, permettent d'orienter par rotation du conteneur le végétal, afin de remédier aux problèmes de lumière.
Ce mode de réalisation permet de planter à l'intérieur du contenant en enlevant le conteneur . La plante est protégé ,les racines et le substrat sont contenues dans le contenant et les toiles l'arrosage est simplifié car l'eau apporté est conduit directement aux racines ainsi que les engrais ou désherbant,les pieds sont protégés contre les risques de blessures et invasions des herbes,des haubans peuvent se fixer aux parois du contenant.

Le contenant peut être réalisé par deux demi tubes assemblés et ,maintenus par un cerclage encerclant le diamètre extérieur du contenant et muni d'orifices équidistants ou peuvent se fixer les haubans et des ancres .Ce mode de réalisation permet d"adapter le dispositif après la plantation.

Dans un autre mode de réalisation pour faciliter la mise en jauge ou la culture,la toile peut se fixer à la base extérieure du conteneur par un bouche trou,ou une cape à paroi souple comprenant une cavité interne et dont la base supérieure se loge dans l'orifice circulaire située la base du conteneur, la toile coiffe la base supérieure et latérale du bouche trou et est serrée dans l'orifice du conteneur. L'eau en trop du conteneur s'écoule par la toile et assure le drainage de la plante,l'eau remonte par la toile par capillarité et assure les besoin en eau.Ce mode de réalisation permet d' enterrer le contenter ou de l'entreposer sur la terre, sur une soucoupe ou un réservoir sans risque d'ancrage des racines dans la terre en y maintenant l'arrosage.

Dans un autre mode de réalisation la cape s'introduit en pression avec la toile dans la base intérieure du conteneur et permet de loger une réserve d'eau dans sa cavité interne, le trop plein est drainé par la toile. la cape utilisée à une collerette large et souple épouse la forme du conteneur. Un bouchon en résines thermoplastiques poreuses à 50% de vide peut être introduit et occupe la réserve d'eau pour éviter le remplissage de la cavité par le substrat, et l'excès d'eau. L'eau contenue dans le bouchon s'évapore en passant par le substrat du conteneur le bouchon en résine peut coiffer une toile d'irrigation qui s'intercale entre le substrat,la paroi intérieure de la cavité, et la paroi externe du bouchon,pour accroître l'irrigation.Pour améliorer le drainage le bouche trou peut être fabriqué avec un bouchon en résines thermoplastiques poreuses,ou produit ayant les même caractéristiques de drainage et de porosité.

Dans un un autre mode de réalisation le conteneur est fabriqué en résine thermoplastiques poreuses ou produits ayant sensiblement les mêmes caractéristiques. Dans ce mode de réalisation les racines sont contenues ,le drainage est assuré;l'irrigation du substrat est obtenue par évaporation de l'eau contenu dans la terre entourant le conteneur enterré.

Le volume du conteneur et du contenant conditionne le développement radiculaire et en conséquence le volume du végétal.

Deux tiges en aciers ressort ou fibres de verre placés au dessus du conteneur et maintenus par les extrémités par quatre trous borgnes logés dans la paroi du contenant emprisonnent le végétal en cas de vol.La flexibilité des tiges permet de les insérer dans le contenant en les déformant en arc de cercle.Dans un autre mode de réalisation les tiges sont insérées par les trous ouverts du contenant et maintenus par un cerclage entourant le contenant.

Dans des situations de sécheresse,un réservoir amovible circulaire s'ajoute,celui ci inséré et coulissant par la base supérieure du contenant se place à la base inférieure et apporte une réserve d'eau. Un bord de la toile de géotextile type "Fibertex F-33S" à haut pouvoir de transmissivité ou autre toile capillaire,maintenue à la base du conteneur,longue de 10 cm plonge dans le réservoir amovible assurant l'irrigation par capillarité.

Ce réservoir peut être de différente hauteur et peut être relié par une canalisation pour son alimentation,son diamètre est inférieur au diamètre du contenant afin de permettre l'écoulement de l'eau en cas de trop plein.

Une jauge, flottante dans l'eau du réservoir dirigée entre la paroi intérieure du contenant et la paroi extérieure du conteneur indique le niveau.

Pour maîtriser d'une manière plus adéquate les besoin en eau du végétal un dispositif amovible se place au dessous du réservoir. II comprend un plateau réglable en hauteur par rotation grâce à un filetage solidaire au contenant et fixant 3 ressorts à boudin à leur base inférieure; qui supportent le réservoir . ce dispositif permet d'augmenter considérablement la hauteur de l'eau dans le réservoir,les ressorts à boudins ayant une déformation proportionelle au niveau d'eau permettent de maintenir un niveau constant.Quant le volume d'eau du réservoir diminue les ressort se détendent en proportion du poids du réservoir et maintiennent un niveau constant. Dans un autre mode de réalisation le réservoir est suspendu par trois ressorts ou sangles élastiques ,à déformation proportionnelle à son poids ,fixés sur la paroi du contenant comprenant plusieurs points d'encrage à hauteur différente,ce mode de réalisation abaisse les coût de fabrication et est plus adapté aux jardinières suspendues.

Ce dispositif permet de régler le débit en eau suivant les conditions climatiques. le niveau d'eau restant constant au dessous du conteneur.grâce aux ressorts , le débit peut être diminuer ou augmenter en réglant la hauteur du plateau qui maintient les ressorts et le réservoir. plus la base du conteneur est distante du niveau d'eau ,plus le débit est faible,plus la distance est courte, plus le débit augmente. Une jauge clipsé sur le réservoir et traversant la paroi du contenant indique le niveau du réservoir.

On peut ainsi changer de conteneur, transplanter et remplacer le végétal à volonté, pour changer de décor, en supprimant les problèmes de reprise. Le contenant cylindrique et le conteneur de forme cylindrique et conique, permettent d'orienter par rotation le végétal, afin de remédier aux problèmes de lumière. Le volume du conteneur conditionne le développement radiculaire et par conséquence son volume.

Dans le même contenant, en fonction de la position du segment coulissant, il est possible d'interchanger des conteneurs de hauteurs différentes.

Le contenant peut contenir le végétal sans le conteneur, le réglage de la position du segment permet de varier le volume de substrat, la toile de géotextile cloisonne les racines tout en maintenant l'irrigation par capillarité et empêche le mélange du substrat avec la terre.

Le contenant comprend deux orifices diamétralement opposés, dont l'un situé à sa base, assure le drainage par passage d'un tube l'autre destiné à recevoir un tube d'irrigation pour l'arrosage automatique ( principe des vases communicants)

Le contenant comprend trois trous en sa partie supérieure, destinés à fixer des tuteurs, haubans et toile de protection. Il comprend aussi, trois trous équidistants où s'introduisent trois chevilles pour améliorer son ancrage ,un cerclage destiné comprenant trois trous équidistants permet aussi de fixer des ancres,et d'améliorer la solidité.

La paroi du contenant est annelé et comprend des gorges circulaires dans sa partie extérieure pour accroître sa résistance et un meilleur ancrage dans le sol .elle permet d'insérer dans les gorges un anneau élastique ,ou un cerclage pour maintenir une toile de paillage et assurant l'étanchéité entre la paroi et la toile de paillage ce dispositif évite la prolifération des mauvaises herbes. autour du végétal. Elle permet de loger un cerclage destiné à fixer les haubans ou ancres et de loger quatre tiges de fer rond placer perpendiculairement et fixées par quatre brides.

le contenant peut être réalisé par l'assemblage de deux demi cylindre à paroi extérieure annelé comprenant des gorges logeant un cerclage destiné a assembler et solidifié l'ensemble. Il est réalisé par découpage vertical d'un tube annelé.

Pour éviter les problème de verse Le contenant peut être groupé et fixé à d'autres contenants par des tiges de fer rond galvanisé parallèles qui s'intercallent dans les gorges du contenant ,les tiges rondes sont maintenus en pression dans les gorges circulaires par des ressorts de traction placés en perpendiculaire.,et peuvent s'intercaler dans les gorges circulaires.

Pour des diamètre inférieur à 120 cm le contenant est réalisé par des tronçons de tube annelé en polyethylène ,utilisé pour des canalisations, abaissant le coût de fabrication,ainsi que le poids. Pour des dimensions supérieure le contenant est réalisé par des viroles en béton,béton poreux ou acier inox

Le contenant peut être de forme variés ,carré,rectangle,ovale hexagonal e.t.c. Il peut être entouré d'un tube en matériau isolant pour réduire les effets du gel ou d'un matériau décoratif quand il est pas enterré. Les dessins annexés illustrent l'invention :
- La figure 1 représente l'invention sans réserve d'eau.
- La figure 2 représente l'invention avec la réserve d'eau
- La figure 3 représente l'invention avec les bouche-trous et les gorges.
- La figure 4 représente l'invention avec la cape introduit à l'intérieur
- La figure 5 représente l'invention avec les tiges d'encrage du contenant
- La figure 6 représente l'invention avec les tiges et ressorts pour grouper les contenants

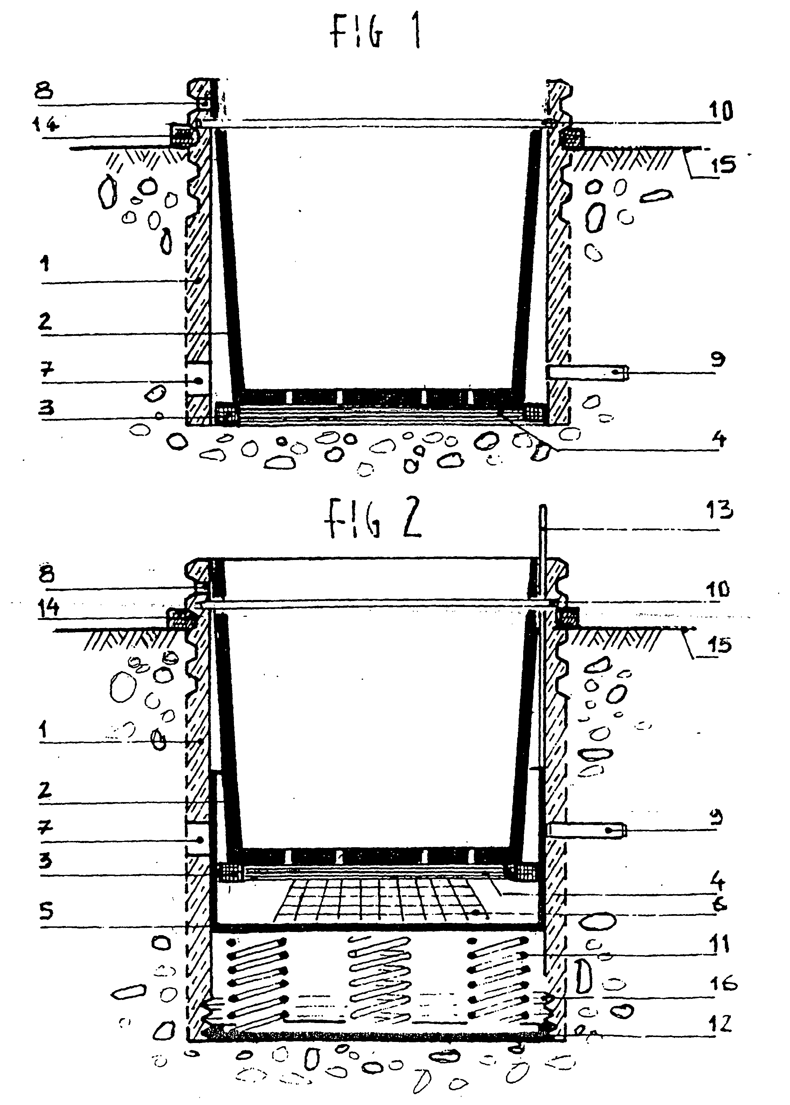

En référence à la figure 1, le dispositif comprend un contenant (1) composé d'un cylindre ouvert des deux côtés, dans lequel s'insère un conteneur (2) cylindrique et conique,à base ajourée ou percée,reposant sur une ou plusieurs toiles (4) tendues par un segment (3).

Les trous (8) assurent la fixation de tuteurs,haubans et toile de protection. Les chevilles amovibles (9) assurent l'ancrage du contenant. Les tiges (10) empêchent l'arrachage du végétal,ou son vol.Les trous(7)assurent le passage d'un tube de drainage,le trop plein du réservoir,et l'alimentation en eau pour l'arrosage par vases communicants.L'anneau élastique (14) assure le maintien de la toile de paillage(15)et l'étanchéité avec le contenant (1)

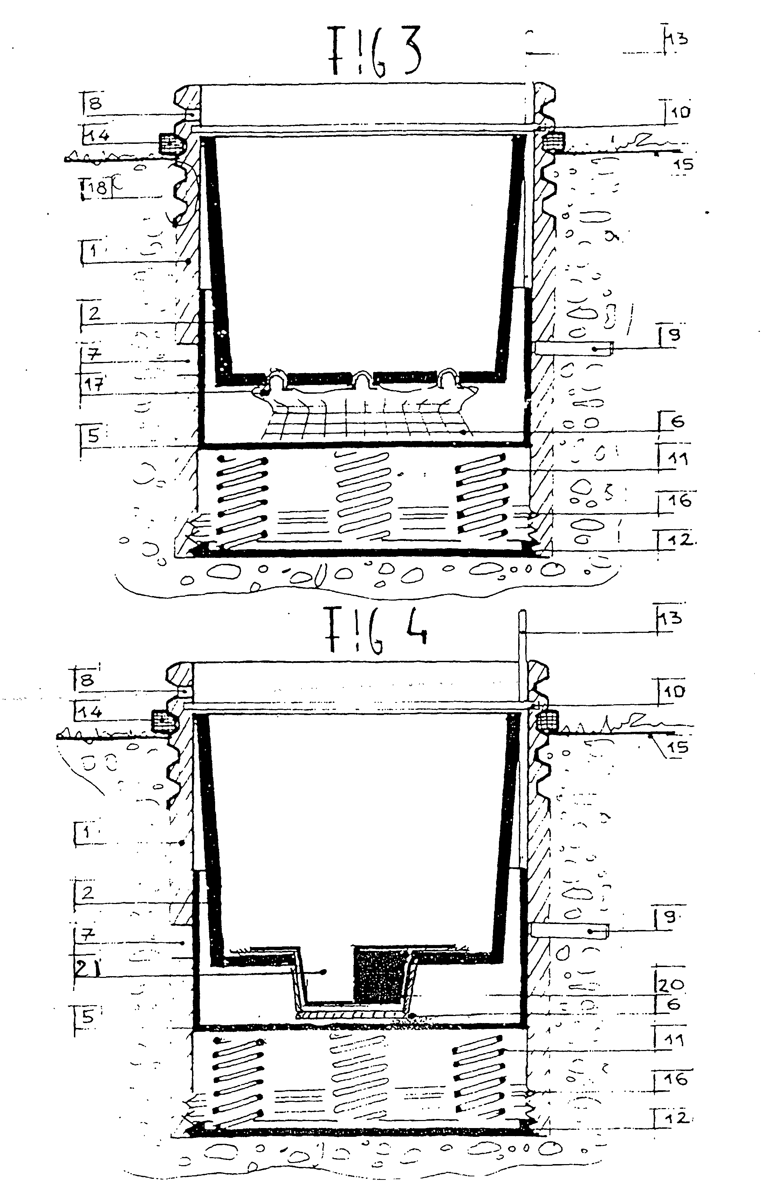

En référence à la figure 2,le dispositif comprend un réservoir (5) amovible coulissant à l'intérieur du contenant (1 ).le conteneur (2) est maintenu par des cales insérées dans les trous (8) .Le rebord de la toile géotextile (6) plonge dans le réservoir (5).

Un plateau (12) réglable en hauteur par des filetages (16) maintien trois ressorts (11) équidistants , maintenant le réservoir (5)

La jauge(13) assure la lecture du niveau d'eau. L'orifice (7) permet le passage d'un tube d'irrigation. Le trop plein du réservoir s'écoule entre la paroi du contenant (1 )et la paroi du réservoir (5).

A titre exemple non limitatif, le diamètre du contenant est 10 fois le diamètre du tronc ou de la tige du végétal, la hauteur du contenant est 5 fois moins grande que celui du végétal.

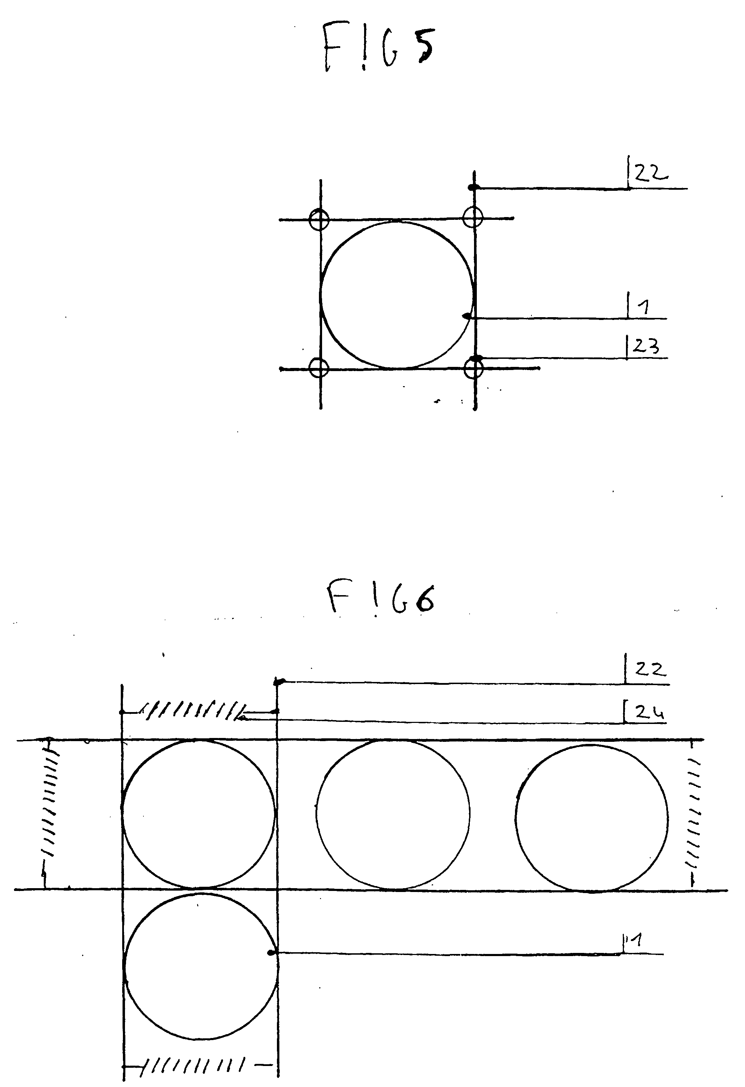

En référence à la figure 3, le dispositif comprend des bouches trou (17) fixant la toile (6). Des gorges circulaires(18) permettent de loger des sangles élastiques,des cerclages ou barres de fer rond.

En référence à la figure 4,le dispositif comprend une cape (20) inséré par l'intérieur dans la base du conteneur (2) La paroi externe de la cape (20)serre la toile (6) dans l'orifice du conteneur (2).La cavité (21) de la cape (20) permet une réserve d'eau.

En référence à la figure 5,le dispositif comprend 4 tiges de fer rond,(22) perpendiculaires insérées dans les gorges du contenant (1) et fixées par des brides (23).

En référence à la figure 6, le dispositif comprend des tiges parallèles et perpendiculaires (22) enserrées dans les gorges des contenants (1) et maintenus par des ressorts de tractions (24).

## Revendications

1. Dispositif pour remplacer les arbres arbustes et fleurs, les cultiver et les entretenir. **caractérisé en ce qu'**il comporte un contenant (1) posé au sol,enterré ou demi enterré dans lequel sincère à l'intérieur un conteneur (2) supportant le végétal, l' arrosage est assuré par une toile (4) à forte capillarité posé sur la terre ou sur un réservoir amovible (5) le développement est maîtrisé par le volume du conteneur, le drainage par un orifice (7)situé à la base du contenant,le désherbage par du paillage situé à l'intérieur et à l'extérieur du contenant,la prise au vent par des haubans et par fixations des contenant,le conteneur (2)peut être enterré seul , pour la mise en jauge ou pour la culture, ou posé sur une soucoupe.

2. Dispositif suivant la revendication 1 **caractérisé en ce que** le contenant (1) est composé d'un tube cylindrique ouvert des deux coté posé, enterré, demi enterré.

3. Dispositif suivant la revendication 2 **caractérisé en ce que** le conteneur (2) contenant la plante est introduit à l'intérieur du contenant (1) et est amovible.

4. Dispositif suivant la revendication 3 en ce que le conteneur (2) est conique et à un diamètre extérieur légèrement inférieur au diamètre intérieur du contenant (1) afin de coulisser et tourner librement

5. Dispositif suivant la revendication 4 en ce que le conteneur(2)est entouré d'une sangle avec deux manches en saillie pour faciliter son enlèvement et permettre l'étanchéité entre le conteneur(2)et le contenant(1).

6. Dispositif suivant la revendication 4 en ce que le conteneur à la base inférieure ajourée ou percée par un ou plusieurs orifices (21)circulaires.

7. dispositif suivant la revendication 4 en ce que le conteneur(2) est posé sur une ou plusieurs toiles(4)polypropylène type géotextile ou toile thermoliée en les pressant sur la terre.

8. Dispositif suivant la revendication 7 en ce que les toiles (4)sont tendus par un segment (3) flexible coulissant et exerçant une pression sur la paroi intérieure du contenant (1).

9. Dispositif suivant la revendication 8 **caractérisé en ce que** le contenant (1) peut contenir la plante après enlèvement du conteneur(2).

10. Dispositif suivant la revendication 2 en ce que le contenant (1) peut être réalisé par deux demi tubes assemblés pour former un cylindre au moyen d'un cerclage encerclant le diamètre extérieur du contenant .

11. Dispositif suivant la revendication revendication 10 en ce que le cerclage est muni de d'orifices équidistant s pouvant fixer des haubans ou ancres .

12. Dispositif suivant la revendication 6 en ce que le bouche trou (17)ou une cape à paroi souple coiffe la toile capillaire (6) et se loge dans l'orifice du conteneur (2)situé a sa base inférieure.

13. Dispositif suivant la revendication 12 et 1 **caractérisé en ce que** la toile (6)est en contact avec le substrat du conteneur , la terre situé sous le conteneur (2) ou l'eau du réservoir(5).

14. Dispositif suivant la revendication 12 **caractérisé que** la toile (6) permet le drainage du conteneur (2)

15. Dispositif suivant la revendication 12 **caractérisé en ce que** la paroi du bouche trou (17) est souple pour maintenir une pression nécessaire a son maintient et permettre le passage de la toile (6).

16. Dispositif suivant la revendication 12 **caractérisé en ce que** la bouche trou ou cape(17) peut être introduit en coiffant la toile(6) dans la base intérieure du conteneur (2)afin de loger une réserve d'eau dans sa cavité interne(21).

17. Dispositif suivant la revendication 16 en ce que la cavité du bouche trou ou cape(21) peut contenir un bouchon en résine thermoplastique poreuses à 50% de vide ou produit similaire pour empêcher le remplissage de la cavité par le substrat et l'excès d'eau.

18. Dispositif suivant la revendication 17 **caractérisé en ce que** le bouchon en résine installé dans la cavité (21) peut coiffer une toile d'irrigation pour accroître les besoins en eau .

19. Dispositif suivant la revendication 12 **caractérisé que** le bouche trou (17) peut être réalisé en résines thermoplastiques poreuses pour accroître le drainage.

20. Dispositif suivant la revendication 3 en ce que le conteneur(2) peut être réaliser en résines thermoplastiques poreuses ou produit ayant des caractéristiques similaire.

21. Dispositif suivant la revendication 2 et 3 **caractérisé en ce que** le contenant (1)comprend quatre trous dans sa parti supérieure pour loger deux barres d'acier emprisonnant le conteneur (2) et le végétal en cas de vol .

22. Dispositif suivant la revendication 21 **caractérisé en ce que** les deux barres d'acier sont maintenus par un cerclage entourant le contenant(1).

23. Dispositif suivant la revendication 1 **caractérisé en ce que** le contenant (1) et peut recevoir un réservoir (5) amovible circulaire inséré par la base supérieure du contenant et placé à l'intérieur de sa base intérieure.

24. Dispositif suivant la revendication 23 **caractérisé en ce que** une toile de géotextile type " Fibertex F-33 S " plaquée ou maintenue à la base du conteneur (2) plonge sur l'eau du réservoir (5)assure l'irrigation du végétal par capillarité.

25. Dispositif suivant la revendication 23 **caractérisé en ce que** le diamètre extérieur du réservoir est inférieur au diamètre intérieur du contenant pour coulisser à l'intérieur du contenant (1) et assurer l'écoulement de l'eau en cas de trop plein.

26. Dispositif suivant la revendication 23 **caractérisé en ce que** le réservoir(5) est posé dur des ressorts de compression ou suspendu par des ressorts de traction ou sangles élastique assurant un niveau constant de l'eau.

27. Dispositif suivant la revendication 26 **caractérisé en ce que** les ressorts de compression sont fixés par un plateau (12)réglable en hauteur par rotation sur un filetage (16) solidaire au contenant (1)

28. Dispositif suivant la revendication 26 **caractérisé en ce que** les extrémités des ressorts de traction ou sangles élastique suspendant le réservoir (5) peuvent être fixé en divers points d'encrage de hauteur différentes du contenant (1 )pour régler la hauteur du réservoir.

29. Dispositif suivant la revendication 23 **caractérisé en ce que** une jauge(13) flotte sur l'eau du réservoir (5) et traverse la paroi du contenant(1) indique le niveau d'eau.

30. Dispositif suivant la revendication 26 **caractérisé en ce qu'**une jauge(13)est fixée sur le réservoir (5) et traverse la paroi du contenant (1) pour indiquer le niveau d'eau.

31. Dispositif suivant la revendication 1 et 8 **caractérisé en ce que** le contenant (1) peut être utilisé comme conteneur.

32. Dispositif suivant la revendication 1 **caractérisé en ce que** le contenant (1)comprend comprend des orifices situés en sa base inférieure assurant le passage de tubes de drainage et d'irrigation.

33. Dispositif suivant la revendication revendication 1 **caractérisé en ce que** le contenant (1 )est annelé dans sa circonférence extérieure et comprends des gorges circulaires(18).

34. Dispositif suivant la revendication 33 **caractérisé en ce que** un cerclage élastique ou métallique sincère dans la gorges(18)pour fixer une toile de paillage , ou fixer des haubans ou des ancres.

35. Dispositif suivant la revendication 33 que le contenant peut être stabilisé par quatre barres de fer rond(22) intercalés en parallèle et perpendiculaire dans les gorges (18)du contenant (1) fixés par des brides .

36. Dispositif suivant la revendication 33 **caractérisé en ce que** plusieurs contenants (1) sont groupés et fixés par des barres de fer rond(22) placées en parallèles dans les gorges (18) des contenants (1)pour empêcher la verse infligée par le vent.

37. Dispositif suivant la revendication 36 **caractérisé en ce que** les barres (22) sont maintenus en pression dans les gorges (18) par des ressorts de traction (24) placés en perpendiculaire s'intercalant dans les gorges(18)

38. Dispositif suivant la revendication 2 **caractérisé en ce que** le contenant (1) est réalisés par un tronçon de tube annelé ou lisse utilisé pour des canalisation.

39. Dispositif suivant la revendication 2 **caractérisé en ce que** le contenant peut être de forme varié carré , ovale , hexagonal et autre.

40. Dispositif suivant la revendication 1 en ce que le contenant (1) et le conteneur(2) peuvent être constitués ou entourés de matériaux isolant pour réduire les effet de gel et de forte chaleur.

## Claims

1. Device for mobility of trees, shrubs and flowers, cultivation and maintenance, **characterised by** the fact that this is made up of a container (1) placed on the earth, buried or half buried, in which an inner container is inserted (2) to house the plant. Watering is ensured by a high capillary action fabric (4) placed on the earth or on a removable reservoir (5). Development is controlled by the capacity of the container, drainage by an orifice (7) located at the base of the container, weed control, by a mulch located inside and outside the container, wind damage protection by guy ropes and container anchors. The container (2) can be buried alone for heeling in or cultivation, or can be placed on a drainage recipient.

2. Device according to claim 1, **characterised by** the fact that the container (1) is made up of a cylindrical tube open on both sides, either placed, buried or half buried.

3. Device according to claim 2, **characterised by** the fact that the container (2) containing the plant is introduced into the container (1) and is removable.

4. Device according to claim 3, **characterised by** the fact that the container (2) is conical and has an exterior diameter slightly less than that of the interior diameter of the container (1), in order to slide into it and turn freely.

5. Device according to claim 4, **characterised by** the fact that the container (2) is surrounded by a strap for ease of removal and enable waterproofing between the container (2) and container (1).

6. Device according to claim 4, **characterised by** the fact that the container has an open work or perforated lower base with one or more circular orifices (21).

7. Device according to claim 4, **characterised by** the fact that the container (2) is placed on one or more geo-textile polypropylene or heat bonded fabric layers (4) pressing them onto the ground.

8. Device according to claim 7, in that the fabric layers (4) are tensioned by a flexible sliding segment(3) exerting pressure on the interior wall of the container (1).

9. Device according to claim 8, **characterised by** the fact that the container (1) can contain the plant after it has been removed from its container (2).

10. Device according to claim 2, **characterised by** the fact that the container (1) can be linked by two assembled half tubes to form a cylinder by means of a band around the exterior diameter of the container.

11. Device according to claim 10, in which the binding is equipped with equidistant orifices for the securing of guy ropes or anchors.

12. Device according to claim 6, in which the grommet (17) or a flexible surface wrap covers the capillary fabric (6) and is housed in the container orifice (2) located on the interior base.

13. Device according to claim 12 and 1, **characterised by** the fact that the fabric (6) is in contact with the container sub strata, the earth located under the container (2) or the reservoir water (5).

14. Device according to claim 12, **characterised by** the fact that the fabric (6) enables draining of the container (2).

15. Device according to claim 12, **characterised by** the fact that the wall of the grommet (17) is flexible to maintain the required pressure to keep it in place and enable the fabric (6) to pass.

16. Device according to claim 12, **characterised by** the fact that the grommet or wrap (17) can be introduced with the interior base of the container (2) being covered in fabric (6) in order to house a water reserve in the internal cavity (21).

17. Device according to claim 16, in that the grommet or wrap (21) cavity can contain a 50% hollow porous thermoplastic resin plug or similar product to prevent the cavity being filled up by the sub strata or an excess of water.

18. Device according to claim 17, **characterised by** the fact that the resin plug installed in the cavity (21) can be covered by an irrigation fabric to increase water supply.

19. Device according to claim 12, **characterised by** the fact that the grommet (17) can be made out of porous thermoplastic resins to increase drainage.

20. Device according to claim 3, in that the container (2) can be made of porous thermoplastic resins or any other product with similar characteristics.

21. Device according to claim 2 and 3, in that the container (1) has four holes in its upper part to house two steel bars securing the container (2) and the plant in the event of theft.

22. Device according to claim 21, **characterised by** the fact that the two steel bars are secured by a band encircling the container (1).

23. Device according to claim 1, **characterised by** the fact that the container (1) can receive a circular removable reservoir (5), inserted by the upper base of the container and placed inside the interior base.

24. Device according to claim 23, **characterised by** the fact that the Fibertex F-33S geo textile fabric is placed or held at the base of the container (2) and immersed in the reservoir water (5) ensuring capillary irrigation of the plant.

25. Device according to claim 23, **characterised by** the fact that the outside diameter of the reservoir is less than the interior diameter of the container in order to slide inside container (1) and ensure the evacuation of water in the event of an overflow.

26. Device according to claim 23, **characterised by** the fact that the reservoir (5) is placed on compression springs, or is suspended from traction springs or elastic bands ensuring a constant water level.

27. Device according to claim 26, **characterised by** the fact that the compression springs are secured by a tray (12) which is height adjustable by rotating a threaded rod (16) bonded to the container (1).

28. Device according to claim 26, **characterised by** the fact that the end of these traction springs or elastic bands suspending the reservoir (5) can be fixed at miscellaneous anchoring points at varying heights within the container (1), to adjust the reservoir height.

29. Device according to claim 23, **characterised by** the fact that the a gauge (13) floats on the reservoir water (5) and crosses the wall of the container (1) showing the water level.

30. Device according to claim 26, **characterised by** the fact that the a gauge (13) is secured onto the reservoir (5) and crosses the wall of the container (1) showing the water level.

31. Device according to claim 1 and 8, **characterised by** the fact that the outer container (1) can be used as an inner container.

32. Device according to claim 1, **characterised by** the fact that the container (1) has orifices located at its lower base ensuring the passage of drainage and irrigation pipes.

33. Device according to claim 1, **characterised by** the fact that the container (1) is annealed over its exterior circumference and has circular throats (18).

34. Device according to claim 33, **characterised by** the fact that an elastic or metal band is inserted into the throats (18) to secure a plastic mulch, or secure guy ropes or anchors.

35. Device according to claim 33, in that the container can be stabilised by four round steel bars (22) inserted in parallel and perpendicular in the throat (18) of the container (1), secured by flanges.

36. Device according to claim 33, **characterised by** the fact that several containers (1) can be grouped and secured using round metal bars (22), and can be placed in parallel in the throats (18) of the containers (1) to prevent any spillage due to the wind.

37. Device according to claim 36, **characterised by** the fact that the bars (22) are held under pressure in the throats (18) by traction springs (24) placed perpendicularly between the throats.

38. Device according to claim 2, **characterised by** the fact that the Container (1) is made up of a length of annealed or smooth tube used for piping systems.

39. Device according to claim 2, **characterised by** the fact that the container can be a square, oval, hexagonal or other shape.

40. Device according to claim 1, in that the container (1) and the container (2) can be made of or surrounded by insulating materials to reduce the effect of frost and high temperatures.

## Patentansprüche

1. Vorrichtung für den Austausch, den Anbau und die Pflege von Bäumen, Büschen und Blumen, **dadurch gekennzeichnet, dass** sie aus einem auf dem Boden aufgesetzten, eingegrabenen oder halb eingegrabenen Behältnis (1) besteht, in welchem sich ein Behälter (2) befindet, der die Pflanze stützt, die Bewässerung wird durch einen Stoff (4) mit hoher Kapillarität sichergestellt, der auf dem Boden oder auf einem herausnehmbaren Reservoir (5) liegt, das Gedeihen wird durch das Volumen des Behälters kontrolliert, die Entwässerung durch eine Öffnung (7) an der Basis des Behältnisses, das Unkrautvernichten durch Strohumwicklung, die sich innerhalb und außerhalb des Behältnisses befindet, der Windeinfluss durch Verspannungen und Befestigung des Behältnisses; für Einschlagen oder Anbau kann der Behälter (2) alleine eingegraben oder auf einen Untersatz gestellt werden.

2. Vorrichtung gemäß Anspruch 1, **dadurch gekennzeichnet, dass** das Behältnis (1) aus einem zylindrischen Rohr besteht, das beidseitig offen und aufgesetzt, eingegraben oder halb eingegraben ist.

3. Vorrichtung gemäß Anspruch 2, **dadurch gekennzeichnet, dass** der Behälter (2), der die Pflanze enthält, ins Innere des Behältnisses (1) geführt wird und herausnehmbar ist.

4. Vorrichtung gemäß Anspruch 3, **dadurch gekennzeichnet, dass** der Behälter (2) konisch ist und sein Außendurchmesser etwas geringer als der Innendurchmesser des Behältnisses (1) ist, damit er problemlos gleiten und gedreht werden kann.

5. Vorrichtung gemäß Anspruch 4, **dadurch gekennzeichnet, dass** der Behälter (2) von einem Spanngurt mit zwei vorspringenden Griffen umgeben ist, um ihn leichter herauszunehmen und die Wasserdichtheit zwischen dem Behälter (2) und dem Behältnis (1) zu ermöglichen.

6. Vorrichtung gemäß Anspruch 4, **dadurch gekennzeichnet, dass** die untere Basis des Behälters durchbrochen oder durch eine oder mehrere runde Öffnungen (21) durchstoßen ist.

7. Vorrichtung gemäß Anspruch 4, **dadurch gekennzeichnet, dass** der Behälter (2) auf einem oder mehreren Polypropylen-Stoffen (4) der Art Geotextil oder thermoverbundenen Stoffen liegt, wobei er sie auf die Erde drückt.

8. Vorrichtung gemäß Anspruch 7, **dadurch gekennzeichnet, dass** die Stoffe (4) durch ein flexibles, gleitendes Segment (3) gespannt werden, welches einen Druck auf die innenwand des Behältnisses (1) ausübt.

9. Vorrichtung gemäß Anspruch 8, **dadurch gekennzeichnet, dass** das Behältnis (1) die Pflanze nach Herausnehmen des Behälters (2) enthaiten kann.

10. Vorrichtung gemäß Anspruch 2, **dadurch gekennzeichnet, dass** das Behäitnis (1) mit zwei zusammengesetzten Halbrohren hergestellt werden kann, um mit Hilfe einer Umreifung um den Außendurchmesser des Behältnisses einen Zylinder zu formen.

11. Vorrichtung gemäß Anspruch 10, **dadurch gekennzeichnet, dass** die Umreifung mit Öffnungen im gleichen Abstand zueinander versehen ist, an welchen Verspannungen oder Verankerungen befestigt werden können.

12. Vorrichtung gemäß Anspruch 6, **dadurch gekennzeichnet, dass** der Lückenfüller (17) oder eine Kappe mit biegsamer Wand den Kapillarstoff (6) umgibt und sich in der Öffnung an der unteren Basis des Behälters (2) befindet.

13. Vorrichtung gemäß Anspruch 12 und 1, **dadurch gekennzeichnet, dass** der Stoff (6) Kontakt zum Substrat des Behälters hat, unter dem Behälter (2) oder dem Wasser des Reservoirs (5) sitzt.

14. Vorrichtung gemäß Anspruch 12, **dadurch gekennzeichnet, dass** der Stoff (6) die Entwässerung des Behälters (2) ermöglicht.

15. Vorrichtung gemäß Anspruch 12, **dadurch gekennzeichnet, dass** die Wand des Lückenfüllers (17) biegsam ist, um einen für sein Stützen erforderlichen Druck zu erhalten und um die Durchführung des Stoffs (6) zu ermöglichen.

16. Vorrichtung gemäß Anspruch 12, **dadurch gekennzeichnet, dass** der Lückenfüller oder die Kappe (17) eingeführt werden kann, indem er den Stoff (6) in der unteren Basis des Behälters (2) umgibt, damit in seinem innenraum (21) ein Wasservorrat gespeichert werden kann.

17. Vorrichtung gemäß Anspruch 16, **dadurch gekennzeichnet, dass** der Hohlraum (21) des Lückenfüllers oder der Kappe einen Verschluss aus porösem Thermoplast-Kunstharz mit Leerraum zu 50 % oder ein ähnliches Produkt enthalten kann, um das Auffüllen des Hohlraums durch das Substrat und den Wasserüberschuss zu verhindern.

18. Vorrichtung gemäß Anspruch 17, **dadurch gekennzeichnet, dass** der im Hohlraum (21) befindliche Kunstharzverschluss einen Bewässerungsstoff umgeben kann, um den Bedarf an Wasser zu erhöhen.

19. Vorrichtung gemäß Anspruch 12, **dadurch gekennzeichnet, dass** der Lückenfüller (17) aus porösem Thermoplast-Kunstharz bestehen kann, um die Entwässerung zu erhöhen.

20. Vorrichtung gemäß Anspruch 3, **dadurch gekennzeichnet, dass** der Behälter (2) aus porösem Thermoplast-Kunstharz oder einem Produkt mit den selben Merkmalen bestehen kann.

21. Vorrichtung gemäß Anspruch 2 und 3, **dadurch gekennzeichnet, dass** das Behältnis (1) in seinem oberen Teil vier Löcher für zwei Stahlstangen enthält, um den Behälter (2) und die Pflanze im Falle von Diebstahl festzuhalten.

22. Vorrichtung gemäß Anspruch 21, **dadurch gekennzeichnet, dass** die beiden Stahlstangen durch eine Umreifung um das Behältnis (1) gestützt werden.

23. Vorrichtung gemäß Anspruch 1, **dadurch gekennzeichnet, dass** das Behältnis (1) ein herausnehmbares kreisförmiges Reservoir (5) aufnehmen kann, das durch die obere Basis des Behältnisses eingeführt und im Innern der unteren Basis eingesetzt wird.

24. Vorrichtung gemäß Anspruch 23, **dadurch gekennzeichnet, dass** ein Stoff der Art Geotextil "Fibertex F-33 S", der gegen die Basis des Behälters (2) gedrückt oder an der Basis gestützt wird, in das Wasser des Reservoirs (5) taucht und die Bewässerung der Pflanze durch Kapillarität sicherstellt.

25. Vorrichtung gemäß Anspruch 23, **dadurch gekennzeichnet, dass** der Außendurchmesser des Reservoirs geringer als der Innendurchmesser des Behältnisses ist, um im Innern des Behältnisses (1) zu gleiten und das Abfließen des Wassers im Falle von Überschuss sicherzustellen.

26. Vorrichtung gemäß Anspruch 23, **dadurch gekennzeichnet, dass** das Reservoir auf Druckfedem liegt oder durch Zugfedem oder elastischen Gurten aufgehängt wird, wodurch ein konstanter Wasserstand sichergestellt wird.

27. Vorrichtung gemäß Anspruch 26, **dadurch gekennzeichnet, dass** die Druckfedern durch eine Platte (12) befestigt werden können, deren Höhe durch Drehen mit Hilfe eines Gewindes einstellbar ist, welches fest mit dem Behältnis (1) verbunden ist.

28. Vorrichtung gemäß Anspruch 26, **dadurch gekennzeichnet, dass** die äußeren Enden der Zugfedern oder elastischen Gurte, an weichem das Reservoir (5) aufgehängt ist, an verschiedenen Befestigungspunkten von unterschiedlicher Höhe am Behältnis (1) befestigt werden können, um die Höhe des Reservoirs einzustellen.

29. Vorrichtung gemäß Anspruch 23, **dadurch gekennzeichnet, dass** ein Anzeiger (13) auf dem Wasser des Reservoirs (5) schwimmt und durch die Wand des Behältnisses (1) geführt wird, um den Wasserstand anzuzeigen.

30. Vorrichtung gemäß Anspruch 26, **dadurch gekennzeichnet, dass** ein Anzeiger (13) am Reservoir (5) befestigt und durch die Wand des Behältnisses (1) geführt wird, um den Wasserstand anzuzeigen.

31. Vorrichtung gemäß Anspruch 1 und 8, **dadurch gekennzeichnet, dass** das Behältnis (1) als Behälter verwendet werden kann.

32. Vorrichtung gemäß Anspruch 1, **dadurch gekennzeichnet, dass** das Behäitnis (1) Öffnungen an seiner unteren Basis enthält, welche die Durchführung von Entwässerungsund Bewässerungsröhren sicherstellen.

33. Vorrichtung gemäß Anspruch 1, **dadurch gekennzeichnet, dass** das Behältnis (1) an seinem äußeren Umfang gewellt ist und kreisförmige Rillen (18) enthält.

34. Vorrichtung gemäß Anspruch 33, **dadurch gekennzeichnet, dass** eine elastische oder metallische Bereifung in den Rillen (18) liegt, um ein Strohtuch oder Verspannungen oder Verankerungen zu befestigen.

35. Vorrichtung gemäß Anspruch 33, **dadurch gekennzeichnet, dass** das Behältnis durch vier runde Eisenstangen (22) stabilisiert wird, die parallel und im rechten Winkel zwischen den Rillen (18) des Behältnisses (1) iiegen und durch Flansche befestigt sind.

36. Vorrichtung gemäß Anspruch 33, **dadurch gekennzeichnet, dass** mehrere Behältnisse (1) gruppiert und durch runde Eisenstangen (22) befestigt werden, die parallel in den Rillen (18) der Behältnisse (1) liegen, um durch Wind hervorgerufenes Umlegen zu verhindern.

37. Vorrichtung gemäß Anspruch 36, **dadurch gekennzeichnet, dass** die Stangen (22) durch Druck in den Rillen (18) durch Zugfedern (24) gestützt werden, die im rechten Winkel zwischen den Rillen (18) liegen.

38. Vorrichtung gemäß Anspruch 2, **dadurch gekennzeichnet, dass** das Behältnis (1) mit einem gewellten oder glatten Rohrstück hergestellt wird, wie es für Kanalisierungen benutzt wird.

39. Vorrichtung gemäß Anspruch 2, **dadurch gekennzeichnet, dass** das Behältnis verschiedene Formen haben kann, quadratisch, oval, sechseckig oder andere.

40. Vorrichtung gemäß Anspruch 1, **dadurch gekennzeichnet, dass** das Behältnis (1) und der Behälter (1) aus Isoliermaterial bestehen oder von ihm umgeben sein können, um Auswirkungen von Frost oder starker Hitze zu verringern.
